# EUROPEAN PATENT APPLICATION

(11) **EP 4 509 221 A1**
(43) Date of publication of application: **19.02.2025**
(21) Application number: 23787876.4
(22) Date of filing: 05.04.2023
(51) Int. Cl.: B05B 13/06, F16L 55/1645, F16L 55/18, F16L 55/32, F16L 55/40, G01N 21/954

(54) **ROBOTISED DEVICE FOR REPAIRING LARGE PIPES**

(30) Priority: 11.04.2022 ES 202230612 U
(71) Applicant: FSO Internacional, S.L., 50720 Zaragoza (ES)
(72) Inventor: FERNÁNDEZ ARENAS, Juan, 50720 Zaragoza (ES); ÁLVAREZ MARTÍN-BALLESTERO, Manuel, 50720 Zaragoza (ES)
(74) Representative: Galán Vélez, Reyes
(86) International application number: PCT/ES2023/070220
(87) International publication number: WO 2023/198947

(57) **Abstract**

Disclosed is a robotised device for repairing large pipes, which allows hydraulic networks to be maintained and repaired without needing to carry out works, thereby overcoming the limitations of current systems. The device is remotely operated and robotised, allows a resin and catalyst mixed inside the device to be sprayed onto the inside of the pipes, thereby increasing the effective working time and the maximum working distance, and comprises a height- and angle-adjustable spray head. The device is intended for the industrial sector of public works and maintenance of hydraulic networks.

## Description

### Background

A hydraulic network is made up of pipes, accessories and structures that conduct the fluid from the collection point to the consumption/evacuation point. The purpose of the supply network is to provide water to users for domestic, public, commercial or industrial consumption in sufficient quantity, with the required sanitary quality and at an adequate service pressure. For its part, the sanitation network (urban drainage, sewage and purification) refers to the collection and transportation of wastewater, industrial and rainwater of a population from the place where it is generated to the place where it is discharged into the environment. natural or treated.

Water infrastructures are aging, with the consequent risk of losing the current quality levels of supply and sanitation services. Currently they are repaired by inserting a mechanism manually pushed by rods into the pipe. This mechanism has a viewing and lighting camera for it and a valve for spraying epoxy resins that cover the inside of the pipe, creating a coating on it. The technical means available in this type of work have the following shortcomings or technological and functional limitations: the capacity of manual pushing with a rod is only about 45m per side of the cupping, the maximum resining time is about 50 minutes because above this time the resin cures inside the hose, forcing Stop the process, clean the hoses and resume resin coating. As the resin coating time progresses, the resin inside the hose becomes denser, which has a direct impact on the spraying of the resin, leading to a poorer quality of the layer. and greater roughness.

A large number of solutions are based on the introduction of a malleable coating that is then inflated, as stated in the patent document WO2016106448, from the Canadian owner Un Flow Technologies 2000 Inc., others evolve this sleeve of repair using modern infusion techniques such as ES277318T3 of the owner Grupo Navec Industrial Services SL. The design of a spray head using a rotating head is the object of the same applicant of the recommended invention, it is included in document U202031282 of the applicant FSO International.

There are no known devices that advantageously resolve the current limitations like the one recommended.

### Object

Have a device that allows maintaining and repairing hydraulic networks without the need to carry out works, overcome the limitations of current manual push rod systems, reduce the number of cuppings and increase their distance; obtain a teleoperated and robotic device that can operate in networks of large sections. Mix resin and catalyst in the device itself and in real time, avoiding complications in the hoses, also increasing the times in which the equipment can work. Minimize the environmental impact of replacing pipes and associated civil works. Reduce execution time and economic investment.

Have a motorized device that allows greater application distances to be achieved while minimizing network records.

### Description

The repair of hydraulic networks without the need for works is carried out by projecting a layer of epoxy resin on the inside of the damaged surface with the aim of repairing all types of pathologies (clogging, corrosion, excessive pressure, poor construction, use and disuse or wear and tear over the years), for all types of materials (copper, iron, lead, PPR, PVC, cement, fiber cement) and for all types of hydraulic installations (hot or cold domestic water supply, heating and air conditioning systems , sanitation and stormwater systems, industrial processes including the food sector, liquid fuel conduction systems, tanks, irrigation systems).

The recommended device is introduced inside the network. It has a frame that integrates at least four independently driven drive wheels, which provides it with a precise turning system as well as better traction and grip. The frame houses at least one control system and receives the two hoses, resin and catalyst, making the mixing in the robotic device itself in the mixing chamber (not shown) which has a valve for resin injection preventing the catalyst from acting on the resin transport hose. Mixing in this chamber avoids curing problems. in current state-of-the-art hoses, extending operating time.

The projection of the resin/catalyst mixture is carried out by means of a spray head made up of a motorized rotating element in the shape of a cylinder which has a plurality of perforations connected to the mixing chamber, in this way the coating can be projected by pressure. in the fluid and the applied centrifugal force. A disc-shaped screen is placed behind the spray head in order to avoid splashes on the device. The head can move or retract in the direction of advance of the device by having a conventional linear actuator. This is useful for passing certain figures. (for example, elbows) that due to the normal length of the device would not allow us to turn. In this way it is possible to collect the linear actuator at the moment of passing the elbow without stopping resining.

Singularly, the spray head must self-center when, for example, there is a change in section in the layout, but the device has means to vary its height as well as its inclination or advance with respect to the device, these last two degrees of freedom They are of great value in the projection of section changes, elbows or other figures of the network. These movements are possible by presenting an articulated system formed by three bars that join the body that contains the spray head and mixing chamber with the frame; it differs from a conventional mechanism known as scissors: in this invention the ends of two of its bars They are articulated with a rotary torque to the body of the head/camera described while their other ends, in addition to having a joint that allows rotation, have the possibility of moving linearly as their rotation torques are installed on a thread and spindle mechanism activated by two motors independently; It has a third bar connected with a rotation torque to the frame and to one of the previous bars at a point between its ends, thus allowing elevation and/or inclination. This tilting movement, the referred tilting movement, whether operated manually or automatically, allows the joints or other discontinuities of the pipes to be better covered compared to a constant perpendicular projection as occurs in other techniques of the state of the art. Detection of the pipe geometry can be carried out using optical distance measurement sensors such as those that use laser (LIDAR), or ultrasound; Versions have been planned in which the measurement comes from the interpretation of the images captured by your vision system.

It has means to know the position of the device, where these means are formed by a rotary encoder on at least one of its wheels whose signal is interpreted by at least one control unit. Versions have been planned in which the device is located using a GPS or others in which the position is interpreted by measuring the hoses, comprising a hose collection system (not shown) synchronized to the forward/reverse of the device. This allows the hoses to always be at a certain tension.

It has means to know the thickness of the resin layer by interpreting the values provided by the positioning means, advance speed and interpretation of the geometry of the pipe and the measurement of the flow rate, this interpretation is possible through its control unit.

The stability of the assembly is reinforced by at least one inertial measurement unit (IMU).

Sometimes it is convenient to project a coating in a specific area such as a deep crack or a detachment without having to excessively coat the nearby areas. For this purpose, versions have been provided in which the device has means to project the resin, limiting the rotary movement of the spray head and its perforations to an angular portion defined by a stepper motor therein and a control unit.

It allows visualization of the pipeline using at least one vision system consisting of a video camera and a lighting source.

### Brief description of the drawings

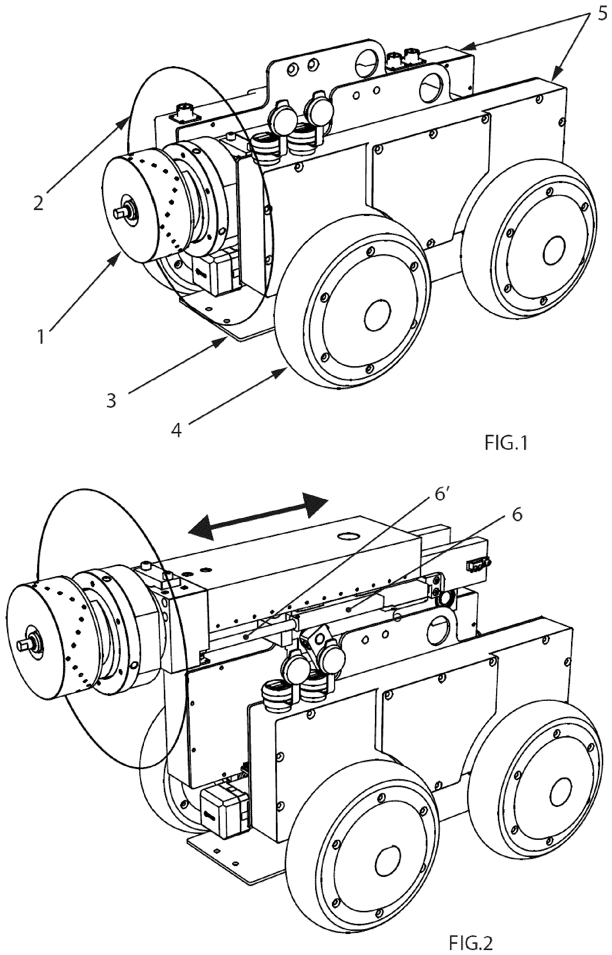

For a better understanding of what is described herein, some drawings are attached in which, by way of example, a list of the figures of the proposed invention is represented. Figure 1 shows an isometric view of the robotic device for the repair of large pipes where it resembled: the spray head (1), the screen (2), the frame (3), the wheels (4) and the unit control (5).

In the isometric view of Figure 2, the linear actuator (6) and the extended portion (6') of the actuator can be seen, the arrow indicates the forward/reverse movement of the spray head with respect to the chassis.

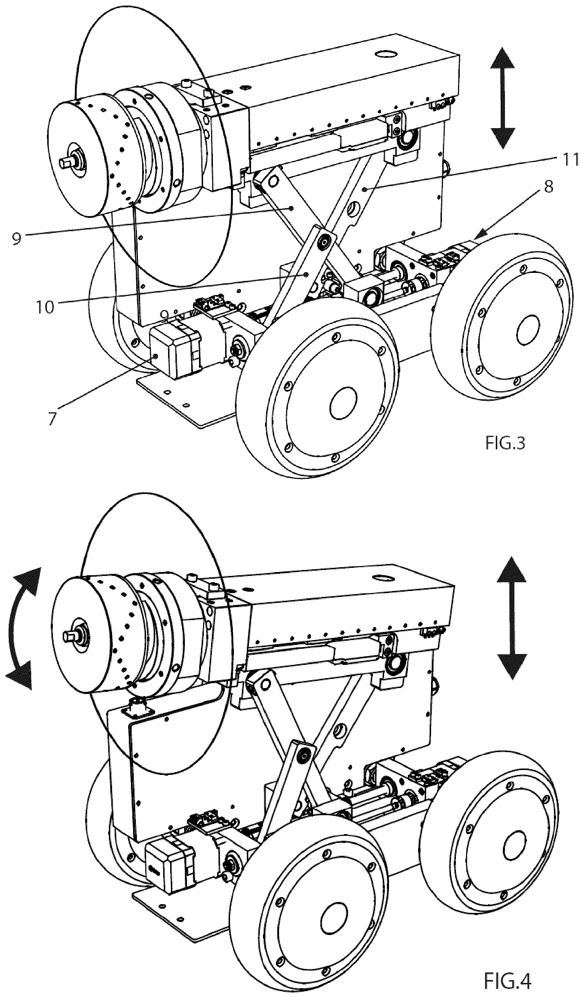

In figures 3 and 4 you can see the lifting and tilting movements of the device with its bars (9, 10 and 11) and motors (7 and 8), as well as the rotation of the spray head, part of the equipment has been removed (control unit on one side) to facilitate the view of the referred elements.

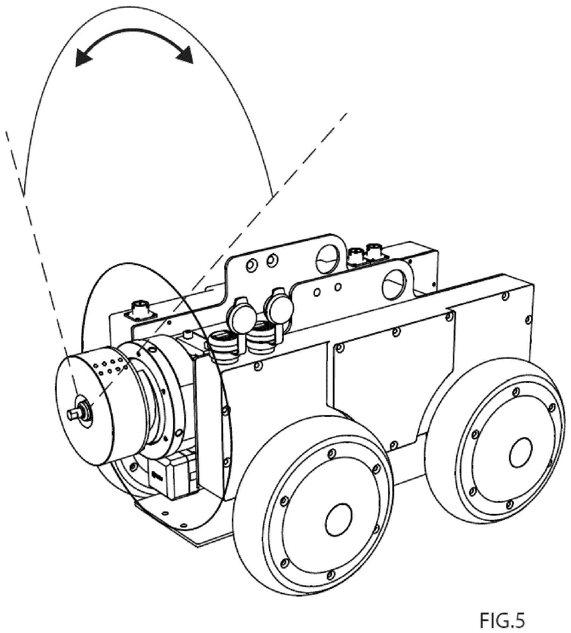

The perspective view of Figure 5 shows an embodiment in which the spray head operates within an angular sector exclusively; it can be seen that its perforations remain within the sector.

### Preferred embodiment

A preferred embodiment is cited as an example, the materials used in its manufacture being independent of the object of the invention, as well as the application methods and all accessory details that may be presented, as long as they do not affect its essentiality.

This preferred mode of embodiment reflects the materialization and corporeality of the invention, specifying details that help understand the invention and how the technical requirements are resolved, in this way the device comprises a frame (3) that houses the different elements that allow the projection of the resin, said frame houses at least one control system (5) and receives the two hoses: resin and catalyst, mixing in the robotic device itself in the mixing chamber (not shown); with 4 driving wheels (4). independently operated, from a cylindrical motorized spray head (1) which has a plurality of perforations through which the resin mixture is projected, behind the head it has a screen (2) that prevents splashes on the device, Figure 1. The head can move linearly with respect to the frame using a conventional linear actuator (6), as well as be raised or tilted, figures 3 and 4, this is possible by having an articulated system formed by three bars that join the body that contains the head. spraying and mixing chamber with the frame, the ends of two of its bars (9 and 11) are articulated with a rotating torque to the body of the head / chamber while its opposite ends have a joint that allows rotation and has the possibility of linear translation when its rotation torques are installed on a thread and spindle mechanism activated by two motors (7 and 8) independently, it has a third bar (10) connected with a rotation torque to the frame and one of the previous bars at a point between their extremes.

The position of the device is known by having a rotary encoder in at least one of its wheels whose signal is interpreted by a control unit (5); It comprises a hose collection system (not shown) synchronized to the forward/reverse of the device, an inertial measurement unit (IMU) to interpret the movement of the device, a vision system formed by a video camera and a power source. lighting, self-centering means of the spray head with respect to the pipe commanded by the control unit through the use of a laser sensor (LIDAR) to guarantee a homogeneous distribution of the projection in a layout that presents different sections, the position of the head is allowed through the articulated system described.

It is provided in this embodiment that the rotary movement of the spray head and its perforations are limited to an angular portion defined by a stepper motor therein and a control unit.

## Claims

1. Robotic device for the repair of large pipes that uses the projection of a mixture of resins for the maintenance of the networks **characterized by** a frame (3) that integrates at least four driving wheels (4) driven independently, of at least one mixing chamber for the resin and the catalyst, a spray head (1) made up of a cylinder-shaped motorized rotating element which has a plurality of perforations, a disc-shaped screen (2) located behind the spray head, means for advancing and retracting the spray head with respect to the device by means of at least one linear actuator (6), means for moving the spray head in height and inclination by means of an articulated system formed by three bars that join the body that contains the spray head and mixing chamber with the frame, the ends of two of its bars (9 and 11) are articulated with a rotating torque to the body of the head/chamber while its opposite ends have a joint that allows rotation and It has the possibility of linear translation as its rotation torques are installed on a screw and spindle mechanism activated by two motors (7 and 8) independently, it has a third bar (10) connected with a rotation torque to the frame and to one of the previous bars at a point between their ends; it comprises means for knowing the position of the device, where these means are formed by a rotary encoder on at least one of its wheels whose signal is interpreted by a control unit (5); It comprises a hose collection system synchronized with the advance/reverse of the device, an inertial measurement unit (IMU), a vision system formed by a video camera and a lighting source, means for self-centering of the spray head with respect to of the pipe commanded by the control unit through the use of a laser sensor (LIDAR).

2. Robotic device for the repair of large pipes according to the first claim **characterized by** being the means to know the geometry of the pipe and interpret the images from your vision system.

3. Robotic device for the repair of large pipes according to the previous claims **characterized by** presenting means to know the thickness of the resin layer by interpreting the values provided by the positioning means, advance speed, and interpretation of the geometry of the pipe and flow measurement, this interpretation is possible through its control unit.

4. Robotic device for the repair of large pipes according to the previous claims **characterized by** presenting means for projecting in an angular sector by means of the actuation of a stepper motor of the spray head through its control unit and the limitation of the perforations of the head.

5. Robotic device for the repair of large pipes according to the previous claims **characterized by** presenting means to know the position of the device through a global positioning system.
